# EUROPÄISCHE PATENTSCHRIFT

(11) **EP 1 130 556 B1**
(45) Veröffentlichungstag und Bekanntmachung des Hinweises auf die Patenterteilung: **01.09.2004**
(21) Anmeldenummer: 01810070.1
(22) Anmeldetag: 25.01.2001
(51) Int. Cl.: G08B 13/24

(54) **Elektronisch detektierbare Resonanzetikette, insbesondere RFID-Labels**
Electronic detectable resonant tags, particularly RFID labels
Etiquettes résonantes détectables électroniquement, en particulier étiquettes RFID

(30) Priorität: 02.03.2000 CH 4062000
(43) Veröffentlichungstag der Anmeldung: 05.09.2001
(73) Patentinhaber: Lucatron AG, 6341 Baar (CH)
(72) Erfinder: Müller, Philipp, 8606 Greifensee (CH)
(74) Vertreter: Lauer, Joachim

(56) Entgegenhaltungen:
- EP-A- 0 380 426
- WO-A-97/41543
- DE-U- 29 622 334
- FR-A- 2 701 146
- INUI K ET AL: "A STUDY OF THE LC RESONANT CIRCUIT SECURITY TAGS" IEICE TRANSACTIONS ON FUNDAMENTALS OF ELECTRONICS, COMMUNICATIONS AND COMPUTER SCIENCES,JP,INSTITUTE OF ELECTRONICS INFORMATION AND COMM. ENG. TOKYO, Bd. E77-A, Nr. 11, 1. November 1994 (1994-11-01), Seiten 1951-1953, XP000492484 ISSN: 0916-8508

## Beschreibung

### TECHNISCHES GEBIET

Die vorliegende Erfindung betrifft eine elektronisch detektierbare Resonanzetikette, insbesondere ein RFID-Label, mit einem Substrat aus einer Kunststofffolie und mit leitenden Flächen auf der Vorder-und der Rückseite des Substrates, wobei einige der leitenden Flächen in einem gegenseitigen Überlappungsbereich einen Kondensator bilden mit einer ersten Kondensatorplatte auf der Substrat Vorderseite und einer zweiten Kondensatorplatte auf der Substrat-Rückseite.

### STAND DER TECHNIK

Derartige Resonanzetiketten sind bekannt, wozu beispielsweise auf WO 89/ 05984 oder EP-A-0 380 426 verwiesen werden kann. Die bekannten Etiketten werden in einem Endlosverfahren unter Verwendung von Bahnen aus metallbeschichterer Kunststofffolie hergestellt, wobei das Muster der Leiterbahnen auf beiden Substratseiten ätztechnisch erzeugt und vor dem Ätzen phototechnisch aufgebracht wird. Es versteht sich, dass hierbei die Leiterbahnen auf der Vorder- und der Rückseite der Folienbahn in einer gewissen relativen Lage zueinander ausgrichtetet werden müssen.

### DARSTELLUNG DER ERFINDUNG

Durch die vorliegende Erfindung, wie sie in den Patentansprüchen gekennzeichnet ist, wird die Aufgabe gelöst, bei Resonanzetiketten der eingangs genannten Art sicherzustellen, dass der Kondensator stets diesselbe Kapazität aufweist, selbst wenn bei der Herstellung die Leiterbahnen auf der Vorder- und der Rückseite des Substrats etwas gegeneinander verschoben werden. Erfindungsgemäss wird dies dadurch erreicht, dass die Kondensatorplatten jeweils die Form länglicher Streifen mit über ihre Länge einheitlicher Breite haben, sich nur teilweise überlappen und dass der Überlappungsbereich mit Abstand von beiden Enden mindestens einer Kondensatorplatte angeordnet ist.

Vorzugsweise ist der Überlappungsbereich sogar mit Abstand von beiden Enden beider Kondensatorplatten angeordnet. Dadurch ergibt sich relative Verschiebungsmöglichkeit in zwei Richtungen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine Aufsicht auf eine einfache Resonanzetikette.
- Fig. 2: eine Aufsicht auf einen RFID Label.

### WEGE ZUR AUSFÜHRUNG DER ERFINDUNG

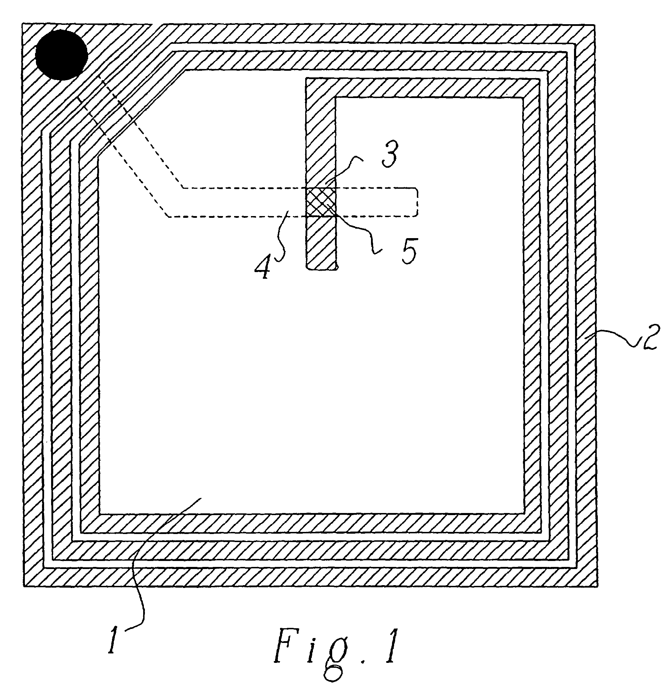

In Fig. 1 wird eine Kunststofffolie 1 gezeigt, auf deren Vorderseite eine Spulenwindung 2 aufgebracht ist. Die Leiterbahn 3 auf der Vorderseite bildet eine erste Kondensatorplatte und die Leiterbahn 4 auf der Kunststofffolien-Rückseite bildet eine zweite Kondensatorplatte im Überlappungsbereich 5. Wird nun bei dem Herstellungsprozess eine Leiterbahn gegenüber der anderen fehlerhaft versetzt, in horizontaler oder vertikaler Richtung, bleibt die Fläche des Überlappungsbereich 5 gleich gross. Die Breite der beiden Leiterbahnen 3, 4 bleiben über ihre Länge konstant gleich gross, dadurch wird verhindert, dass bei einem Verschieben der einen Leiterbahn während des Herstellungsprozess, die Fläche des Überlappungsbereichs 5 sich verändert. Dies bedeutet, dass durch die Verschiebung der einen oder beiden Leiterflächen keine Kapazitätveränderung auftreten kann. Durch diese Anordnung der Leiterbahnen 3, 4 ist es möglich einen sehr hohen Toleranzbereich bei der Herstellung von solchen Kondensatoren auf Resonanzetiketten zu schaffen.

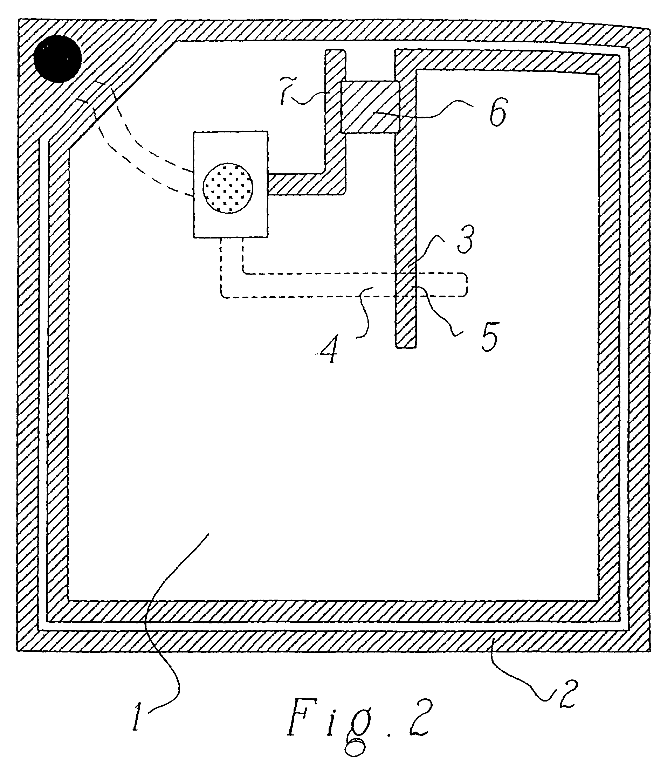

Fig. 2 zeigt einen RFID Label mit einem Chip 6 zwischen zwei leitenden Flächen 3, 7 auf der Kunststofffolien-Vorderseite. Auch bei dieser AUsführungsform ergibt sich eine relative Verschiebungsmöglichkeit der Kondensatorplatten 3, 4.

### BEZEICHNUNGSLISTE

- 1: Kunststofffolie
- 2: Spulenwindung
- 3: Leiterbahn (Vorderseite)
- 4: Leiterbahn (Rückseite)
- 5: Überlappungsbereich
- 6: Chip
- 7: Leitende Fläche auf der Kunststofffolien- Vorderseite

## Patentansprüche

1. Elektronisch detektierbare Resonanzetikette, insbesondere RFID-Label, mit einem Substrat aus einer Kunststofffolie (1) und mit leitenden Flächen auf der Vorder-und der Rückseite des Substrates, wobei einige der leitenden Flächen in einem gegenseitigen Überlappungsbereich (5) einen Kondensator bilden mit einer ersten Kondensatorplatte (3) auf der Substrat Vorderseite und einer zweiten Kondensatorplatte (4) auf der Substrat-Rückseite, **dadurch gekennzeichnet, dass** die Kondensatorplatten jeweils die Form länglicher Streifen mit über ihre Länge einheitlicher Breite haben, sich nur teilweise überlappen und dass der Überlappungsbereich (5) mit Abstand von beiden Enden mindestens einer Kondensatorplatte angeordnet ist.

2. Elektronisch detektierbare Resonanzetikette nach Anspruch 1, **dadurch gekennzeichnet, dass** der Überlappungsbereich (5) mit Abstand von beiden Enden beider Kondensatorplatten angeordnet ist.

## Claims

1. Electronically detectable resonance labels, in particular RFID labels having a substrate made from a plastic foil (1) and with conductive surfaces on the front and rear sides of the substrate, wherein certain of the conductive surfaces form a capacitor in an opposing overlapping zone (5) with a first capacitor panel (3) on the front side of the substrate and a second capacitor panel (4) on the rear side of the substrate, **characterised in that** the capacitor panels each have the shape of elongated strips with uniform width for the entire length thereof, overlap each other only partially, and that the overlapping zone (5) is arranged at a distance from both ends of at least one capacitor panel.

2. Electronically detectable resonance labels according to claim 1, **characterised in that** the overlapping zone (5) is arranged at a distance from both ends of both capacitor panels.

## Revendications

1. Etiquette de résonance détectable par voie électronique, notamment étiquette RFID, avec un substrat en un film plastique (1) et avec des surfaces conductrices sur la face avant et sur la face arrière du substrat, quelques unes des surfaces conductrices formant un condensateur dans une zone de chevauchement réciproque (5), avec une première plaque de condensateur (3) sur la face avant du substrat et une seconde plaque de condensateur (4) sur la face arrière du substrat, **caractérisée en ce que** les plaques de condensateur présentent respectivement la forme de rubans allongés, avec une largeur homogène sur toute leur longueur, ne se chevauchent que partiellement et **en ce que** la zone de chevauchement (5) est disposée à distance des deux extrémités d'au moins une plaque de condensateur.

2. Etiquette de résonance détectable par voie électronique selon la revendication 1, **caractérisée en ce que** la zone de chevauchement (5) est disposée à distance des deux extrémités des deux plaques de condensateur.
